(19) Europäisches Patentamt
European Patent Office
Office européen des brevets

(11) **EP 3 118 830 B1**

(12) **EUROPEAN PATENT SPECIFICATION**

(45) Date of publication and mention
of the grant of the patent:
**06.03.2024 Bulletin 2024/10**

(21) Application number: **16178901.1**

(22) Date of filing: **11.07.2016**

(51) International Patent Classification (IPC):
**G08G 1/01** *(2006.01)* **G08G 1/16** *(2006.01)*

(52) Cooperative Patent Classification (CPC):
**G08G 1/0112; G08G 1/0141; G08G 1/163**

(54) **ADAPTIVE BEACONING FOR VEHICULAR NETWORKS**

ADAPTIVE BEFEUERUNG FÜR FAHRZEUGNETZWERKE

BALISAGE ADAPTATIF POUR RÉSEAUX VÉHICULAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.07.2015 GB 201512195**

(43) Date of publication of application:
**18.01.2017 Bulletin 2017/03**

(73) Proprietor: **Vodafone IP Licensing Limited
Newbury, Berkshire RG14 2FN (GB)**

(72) Inventors:
• **THIBAULT, Ilaria**
**London W2 6BY (GB)**
• **LISTER, David Robert**
**London W2 6BY (GB)**
• **BARBIERI, Daniele**
**London W2 6BY (GB)**

(74) Representative: **Boult Wade Tennant LLP
Salisbury Square House
8 Salisbury Square
London EC4Y 8AP (GB)**

(56) References cited:
**EP-A2- 2 869 534          US-A1- 2010 106 364
US-A1- 2010 324 775    US-A1- 2013 131 949
US-A1- 2014 045 556**

• **MIGUEL SEPULCRE ET AL: "Congestion and
Awareness Control in Cooperative Vehicular
Systems", PROCEEDINGS OF THE IEEE, IEEE.
NEW YORK, US, vol. 99, no. 7, 1 July 2011
(2011-07-01), pages 1260-1279, XP011367584,
ISSN: 0018-9219, DOI:
10.1109/JPROC.2011.2116751**

**Description**

**Technical Field of the Invention**

The invention concerns control of periodic transmission of beacon messages from a vehicular network station at a vehicle, in the form of a method and a corresponding beacon controller.

**Background to the Invention**

A vehicular network is a well-known network structure, where cars (or other types of vehicle) periodically exchange information packets with the purpose of implementing safety-related services to improve road safety and prevent accidents. This may also be termed a vehicle-to-vehicle (V2V) system. In this context, each car is equipped with a wireless communication module and can communicate with other cars, with fixed infrastructure nodes such as base stations and road side units (RSUs), and with pedestrians. Some examples of use cases for vehicular networks are listed in the table below.

| | |
|---|---|
| Roadwork warning | Lane change assistance |
| Overtaking vehicle warning | Across traffic turn collision risk warning |
| Emergency electronic brake lights | Merging Traffic Turn Collision Risk Warning |
| Emergency vehicle warning | Hazardous location notification |
| Slow vehicle warning | Intersection Collision Warning |
| Motorcycle warning | Co-operative forward collision warning |
| Vulnerable road user Warning | Collision Risk Warning from RSU |
| Wrong way driving warning | Stop Sign Violation Warning |
| Stationary vehicle warning | Blind Merge Warning |
| Traffic condition warning | Blind Spot Warning |
| Signal violation warning | Platooning |
| Decentralized floating car data | |

Vehicular network stations on board a vehicle typically broadcast periodic beacons to advertise their position, speed, and other status information and the safety-related applications, in turn, processes this information to create alerts in the event of possible hazards. The periodicity of the safety beacons is a key parameter to be set to meet the requirements of a given safety scenario. The periodic nature of the beacon signalling means that the amount of wireless radio resources (including power, bandwidth, capacity and processing resource for instance) and the radio access network capacity needed to guarantee a desired level of safety for a safety application is demanding. The safety application may be an application on the user's wireless device or operated on a central server.

Existing standards and European Union (EU) projects that focus on vehicular communications (such as IEEE 802.1 1p, ETSI ITS, NHTSA, METIS or similar) typically give some guidelines regarding the requirements for different safety-related scenarios. Here, the beacon periodicity is usually set as a fixed parameter throughout the lifetime of a given service (for instance, one beacon every 1 00ms or equivalently a frequency of 10 Hz). A fixed beacon periodicity imposes a fixed amount of wireless network capacity per vehicle to be allocated for a given safety-related service. This approach is not efficient, as there are situations where vehicular stations do not need to be involved in beaconing at a high periodicity (for example, if they are statically queuing at a traffic light).

It is therefore desirable to allow the beacon periodicity to vary in time with the objective of using a reduced or even a minimal amount of radio resources to meet a desired safety requirement. This offloads the network when possible and only uses capacity when it is strictly required according to a set of criteria that are part of the proposed algorithm. A number of existing approaches consider adaptive periodicity of the beacons, for example setting the beacon periodicity based on the dynamics of the traffic.

WO-2014/046575 concerns a cluster-based architecture for a vehicular environment, in order to decrease the number of exchanged beacons. In particular, if the cars are closer than a certain threshold they form a cluster and one of the two stops sending cooperative awareness messages. This may reduce resource utilisation, but it is not clear that safety will still be maintained.

EP-2 843 639 proposes a range of possible beacon adaptations: adapting the periodicity according to the specific road on which the vehicle is travelling; linearly increasing the periodicity if the car is approaching a traffic light or a traffic jam; linearly increasing the periodicity according to the speed of the car on which the device is mounted; and adapting the periodicity according to the current hour, date, weather or available bandwidth. Whilst these parameters may be useful to consider, the goal of safety is not rigorously maintained in this approach.

It is desirable to set the periodicity of transmission at an appropriate value to maintain or improve safety, whilst mitigating the problem of unnecessary resource utilisation. Existing approaches do not achieve this goal to a great enough extent, especially in relation to specific safety scenarios.

Sepulcre, Miguel, et al, "Congestion and awareness control in cooperative vehicular systems", Proceedings of the IEEE 99.7 (2011): 1260-1279 surveys methods to ensure that each vehicle can detect and communicate with neighboring vehicles in order to avoid saturation of a V2X channel.

## Summary of the Invention

Against this background, there is provided a method for controlling periodic transmission of beacon messages from a vehicular network station at a vehicle according to claim 1 and a corresponding beacon controller in line with claim 11. The beacon controller may be in the form of a computer program, hardware, software, firmware or a combination thereof. Other preferred features are disclosed with reference to the claims and in the description below.

A range of parameters are considered, which may provide a more quantified approach to determining the beacon periodicity (in this sense, frequency), BP. In particular, the following parameters and considerations may improve utilisation (particularly, reduce with respect to known fixed periodicity approaches) and maintain or improve safety. This is achieved by better evaluating the beacon periodicity for a vehicle that will result in adjacent vehicles receiving updated information within a time period that allows corrective action to be taken. Conversely, the approach may set the beacon periodicity to take account of the distance travelled by the vehicle before up-to-date information is transmitted (conversely, the distance travelled by the other, adjacent vehicle on the basis of out-of-date information). As the distance reduces, the periodicity should increase. Once the distance hits a minimum, the periodicity may not increase further, however, such that there is a maximum periodicity based on the technological limitations.

Based on the above, considerations include whether a determined distance between the vehicle and the other vehicle, d, is less than a minimum distance, $d_{min}$, the minimum distance being determined on the basis of a predetermined maximum periodicity of the periodic transmission; and increasing the periodicity of the periodic transmission, BP, in response to a reduction in a determined distance between the vehicle and the other vehicle, d, and preferably decreasing the periodicity of the periodic transmission, BP, in response to an increase in a determined distance between the vehicle and the other vehicle, d. These take into account the technological limitations and safety considerations. Other parameters may also affect the beacon periodicity, accordingly, based on the safety scenario. For example, the distance used for determining the beacon periodicity may be corrected by considering errors and tolerances, such as one or more: communication latency; positioning error; reaction and/or slowing distances; and the vehicle velocities.

The safety scenario considered relates to distance between the vehicle and one other vehicle that is travelling in the same direction (especially in the same road lane), either ahead or behind. Some particular parameters of interest include: a reaction or thinking distance, TD, which may represent the distance travelled by the vehicle during the time taken by the driver to react to new information; a slowing distance, DecD, that may identify a distance for the vehicle to decelerate from a current velocity to a velocity of the other vehicle; a positioning error for the vehicular network station and/or the associated vehicular network station of the other vehicle, PosErr; and a latency for communications between the vehicular network station and the associated vehicular network station of the other vehicle, Lat. Each of these parameters may have a significant effect on the distance travelled on the basis of out-of-date information.

In practice, the updated periodicity of the periodic transmission may be established in the following way. Firstly, a minimum distance is determined based on a predetermined maximum periodicity for the periodic transmission. The minimum distance is determined on the basis of the predetermined maximum periodicity for the periodic transmission by taking into account latency and optionally one or more of the other parameters indicated above. If the actual distance between the vehicle and the other vehicle is no greater than the minimum distance, the updated periodicity of the periodic transmission is set to the predetermined maximum periodicity for the periodic transmission. If the actual distance is at least the determined (or calculated) minimum distance, the following procedure may take place.

A total spatial resolution (which is a sum of a respective spatial resolution for each of the vehicle and the other vehicle) is determined, for example based on the distance between the vehicle and the other vehicle together with one or more of the parameters identified above. A data freshness value for the vehicle may be determined based on the total spatial resolution and the velocities of each of the vehicle and the other vehicle (preferably, the sum of their velocities). Taking into account at least one other parameter identified above, a minimum updated periodicity of the periodic transmission, $BP_{min}$, may be determined. This minimum may be converted in an updated periodicity of the periodic transmission by factoring in a safety margin, SM, (which may be a fixed or variable parameter). In a particular example, the updated periodicity of the periodic transmission is determined by: BP = $BP_{min}$ + SM.

The above procedure may be used to determine an updated periodicity of the periodic transmission for between the vehicle and a first other vehicle (either in front or behind, say). However, the procedure may be repeated to determine an updated periodicity of the periodic transmission for between the vehicle and a second other vehicle (if the first other vehicle is in front of the vehicle, the second other vehicle may be behind the vehicle and vice versa). Then, the actual updated periodicity of the periodic transmission may be the maximum of the two updated periodicity of the periodic transmission. Once an updated periodicity of the periodic transmission has been established dependent on the scenario, it may be applied by adjusting the periodicity of the periodic transmission accordingly.

Optionally, in the method the step of determining at least one parameter of the other vehicle may comprise receiving the at least one parameter of the other vehicle from a transmission of a beacon message by the vehicular network station at the other vehicle.

### Brief Description of the Drawings

The invention may be put into practice in various ways, one of which will now be described by way of example only and with reference to the accompanying drawings in which:

Figure 1 is a schematic diagram, illustrating a first scenario with two vehicles;
Figure 2 schematically shows communication time periods between vehicular network stations;
Figure 3 plots beacon periodicity and the generated traffic against latency in respect of the communication time periods of Figure 2;
Figure 4 depicts a flow chart according to an embodiment of the disclosure; and
Figure 5 is a schematic diagram, illustrating a second scenario with four vehicles.

### Detailed Description of a Preferred Embodiment

Throughout the following description the terms periodicity and frequency will be used interchangeably, however periodicity if more commonly used to mitigate any ambiguity that may inadvertently arise with the more commonly used frequency terms or values such as the particular frequency on which the transmission is sent rather than the frequency of transmission which may be the intended use of the term.

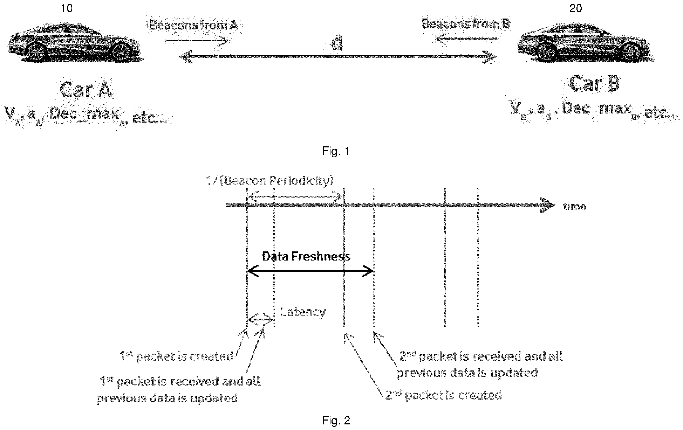

Referring first to Figure 1, there is shown a schematic diagram, illustrating a first scenario with two vehicles: a first vehicle 10; and a second vehicle 20. This shows the first vehicle 10, marked car A, and second vehicle 20, marked car B, driving in the same direction and car A 10 is following car B 20. In order to avoid a possible rear-end collision, car A 10 should track the position of car B 20 and vice versa. If the two cars are too close, the driver is alerted. The distance between the cars is shown as d. Each car has a specific set of parameters, which may include speed $V_X$, acceleration $A_X$, maximum deceleration rate $Dec\_max_X$ (maximum ability to decelerate), where the subscript X may be A or B dependent on the car. The beacon periodicity is advantageously a function of these parameters and therefore adaptively changes over time, preferably in a dynamic way.

Using the terminology set out by the standards of the European Telecommunications Standards Institute (ETSI), two types of messages may be exchanged. A first type is referred to as DENMs (Decentralized Environmental Notification Message). These are used for communication in respect of specific events. A second type of message is called CAMs (Cooperative Awareness Messages). The purpose of these is to notify position, speed, acceleration and similar to the surrounding vehicles. The periodicity referenced in the approach herein relates to beacon messages that are CAMs or similar (dependent on the protocols and/or technologies being used).

Other parameters may further be considered, such as the parameters contained in the beacon packets as recommended by standards, measurements collected by on-board sensors, network status information and others. Some of the parameters contained in the beacon packets as recommended by standards are listed in the table below. Other factors may include Sensor data that could be reported by an engine management unit such as: rainfall (as measured by, e.g., windscreen sensors); brake wear; tyre pressure; and alarms in general.

| | |
|---|---|
| Latitude | Drive direction |
| Longitude | Vehicle length |
| Speed | Vehicle width |
| Acceleration | Lane position |
| Yaw rate | Altitude |

In such a scenario with a vehicular network, cars exchange periodic awareness beacons to advertise the parameters, as identified above (their position, speed, acceleration, etc.), in order to implement safety-related services, to prevent accidents and improve overall road safety. As explained above, the beacon periodicity is typically fixed over time and across use cases, as most standards recommend, and this involves cars broadcasting signals every 100 ms, regardless of their behaviour. As an example, a car will send signals every 100 ms even if it is queuing at a traffic light. In other words, the periodicity is fixed even if the vehicle does not need to advertise its position so often.

Having a fixed beacon periodicity puts strain on a wireless network, since a significant amount of radio resources are allocated for this service all the time, even if they are not strictly needed. An adaptive beacon periodicity is more desirable as it allows cars to use network capacity only when it is strictly required by the safety application.

An algorithm is now presented, to adapt beacon periodicity according to traffic dynamics. This algorithm is termed: Beaconing Adaptation for Safety Enhancement (BASE). In this algorithm, cars cooperatively adapt their beacon periodicity according to their relative speeds, relative distances, accelerations, maximum deceleration rates, yaw rates. In general, other parameters can be factored in such as the ones recommended by standards (for example, those listed in the table above), measurements collected by on-board sensors, network status information and similar input. The algorithm (and the disclosure) may be considered as independent of the adopted radio access network technology for the vehicular network (for example, 802.11p/WAVE, LTE, 5G or others).

The algorithm uses the concept of Data Freshness, which will now be explained. The data freshness may be considered as the maximum time that can elapse from the moment in which a packet is created at its source to the moment in which its information is used at the destination. It also represents the maximum acceptable time before a piece of information needs to be refreshed.

Referring next to Figure 2, there are schematically shown communication time periods between vehicular network stations. The first parameter is the beacon period, which is the reciprocal of the beacon periodicity, BP, or frequency (how often the beacon packets are sent in a unit of time). The second parameter is the end-to-end latency, Lat. This is the time elapsed between the moment at which a packet is created at its source to the moment at which it is received at the destination. Both parameters are shown pictorially in Figure 2 and the data freshness, DF, is also shown based on these parameters. In particular, it may be seen that the data freshness is typically the sum of the beacon period and the latency. Conversely, to fulfil the given requirement on data freshness, the end-to-end latency and the beacon periodicity are set according to the following expression (with possible units shown in square brackets).

$$DF\ [s] = 1/\ (BP[Hz]) + Lat\ [s]$$

There is a fundamental trade-off between latency and periodicity. A lower end-to-end latency allows for a lower beacon periodicity, in order to achieve a given value of data freshness. On the other hand, if the end-to-end latency is higher, the beacon periodicity must be increased in order to meet the requirement on data freshness. The beacon periodicity, in turn, is (directly) proportional to the traffic generated by the application. Thus, increasing the beacon periodicity means increasing the traffic generated by the application. As a consequence, the radio resource utilization is also increased thereby

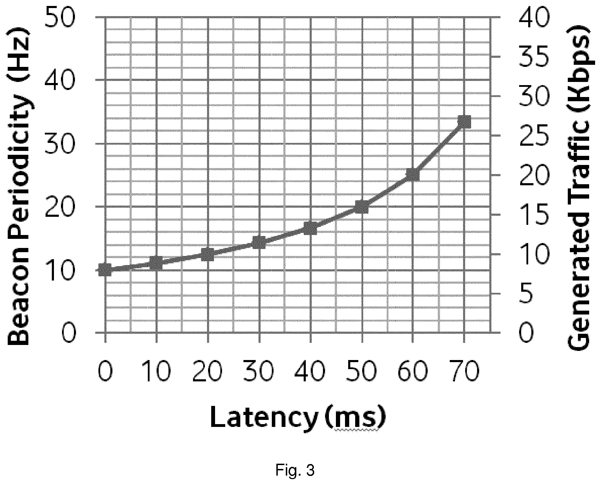

Referring now to Figure 3, there is shown a plot of beacon periodicity and the generated traffic against latency in respect of the communication time periods of Figure 2. This provides a representation of the trade-off between end-to-end latency and beacon periodicity (in Hz). For a given requirement on data freshness (100ms in this example), different combinations of beacon periodicity and latency are shown. As can be seen, a high end-to-end latency requires higher resource utilisation. The generated traffic (in KBps) is also plotted and since this is directly proportional to beacon periodicity, the same line is shown with a different vertical scale (assuming that 100 bytes per beacon packet).

Since packets are received at discrete time instants, the cars can only have a limited degree of awareness of what is happening in the space around them. This degree of awareness improves when more packets are received in a unit of time and decreases when fewer packets are received in the same unit of time. The term "spatial resolution", SR, can be used to denote this spatial awareness. Assuming that the vehicle is travelling at a constant speed, V, it can be calculated as follows.

$$SR = DF * V$$

Based on matching this spatial resolution to the distance between the vehicle and other objects (especially other vehicles) along the vehicle's line of travel and/or direction of travel, the beacon periodicity can be appropriately set. In general terms, this may be considered updating the beacon periodicity in accordance with a spatial resolution to meet a safety requirement. The spatial resolution may be defined by the latency and vehicle velocity and/or acceleration.

However, other factors may also be taken into consideration. For example, the GPS positioning system may introduce a positioning error, PosErr, that we may assume is fixed and known. This in turn also affects awareness. For a given vehicular use case, it is further possible to derive the maximum value of spatial resolution and positioning error that can be accepted in order to meet the safety requirements. If the error introduced by the positioning system is considered fixed, it is possible to find which value of spatial resolution should be adopted to meet the safety requirements. Spatial resolution depends on data freshness, as indicated above, and also on speed and acceleration of the vehicle. Hence, the requirement on spatial resolution can be turned into a requirement on data freshness. Such a requirement on data freshness can be achieved with a trade-off between end-to-end latency and beacon periodicity, as indicated by the expression above. Therefore, for a given requirement on data freshness and a given value of end-to-end latency, it is possible to find the appropriate value of beacon periodicity to use according to the following formula, derived from the expression above.

$$BP = 1 / (DF\text{-}Lat)$$

Algorithm for rear-end collision avoidance

The BASE algorithm for rear-end collision avoidance will now be presented. In this scenario the objective is to keep cars at a distance, so to reduce the possibility of a rear-end collision. The algorithm is tailored around this objective. Nevertheless, the algorithm can be adopted in a range of other safety-related use cases, such as the ones listed in the table indicated above in the background to this disclosure.

For this scenario, reference is again made to Figure 1. A scenario may be considered, in which two cars are driving in the same direction, where car A 10 is following car B 20. Here: d is the distance between the two cars (which can be calculated from the GPS coordinates, contained in the beacon packets, or reported by radar sensors); $V_X$ is the speed of car X (this value is contained in the beacon packets); $a_X$ is the acceleration of car X (this value is contained in the beacon packets); $Dec\_max_X$ is the maximum deceleration rate (maximum ability to decelerate) of car X (this value is contained in the beacon packets); BPmax is the maximum value of beacon periodicity at which the cars can transmit beacons and might depend on the network, on the wireless devices or other technological, regulatory, power or utilisation constraints (this value is considered known); and Lat is the end-to-end latency, which can be calculated through the timestamps contained in the beacon packets.

A number of specific parameters are now considered for the algorithm. The first of these is a thinking distance (TD), which may also be called a reaction distance. This is defined as the space covered by car A during car A's driver's reaction time (RT). Typically, this value depends on the speed, acceleration and deceleration rate of the cars, the reaction of the driver and it may be calculated through classic physical motion equations.

Another parameter is the distance needed by car A to decelerate from its initial speed to car B's initial speed (DecD), if $V_A > V_B$. This value normally depends on the speed, acceleration and deceleration rate of the cars, the reaction of the driver and may also be calculated through classic physical motion equations.

Then, the critical distance ($d_{critical}$) may be defined as the sum of TD and DecD:

$$d_{critical} = TD + DecD$$

The positioning error (PosErr) includes the errors introduced by the positioning systems of the two cars. This value is considered known.

Key parameters to be considered are the minimum values of spatial resolution, that is, the finest spatial resolutions that can be achieved by the cars ($SRmin_A$, $SRmin_B$) are also considered. $SRmin_A$, $SRmin_B$ are key parameters because they represent the minimum tracking error introduced by the communication between the cars that can be achieved. The spatial resolution is related (proportional) to the data freshness and the speed of the cars (assuming $a_A = a_B = 0$, that is, constant speeds). Therefore, to calculate the minimum value of spatial resolution achievable for a certain speed, the minimum data freshness that can be achieved should be calculated. $SRmin_A$ and $SRmin_B$ can be calculated as follows (assuming $a_X = a_X = 0$, that is, constant speeds), assuming that minimum values of data freshness, $DFmin_A$, $DFmin_B$, are known.

$$SRmin_A = DFmin_A * V_A$$

$$SRmin_B = DFmin_B * V_B .$$

The minimum values of data freshness can be calculated. Since the data freshness is inversely proportional to the beacon periodicity (as showed in the expression indicated further above), for a given value of end-to-end latency, the minimum values of data freshness ($DFmin_A$, $DFmin_B$) can be given by the following equations (where $Lat_X$ indicates the latency associated with communications from vehicle X and $BPmax_X$ represents the maximum beacon periodicity for vehicle X).

$$DFmin_A = 1/(BPmax_A) + Lat_A$$

$$DFmin_B = 1/(BPmax_B) + Lat_B$$

It is possible to define $d_{min}$ as the minimum distance at which the cars (or other vehicles) should drive in order to allow the safety application to alert the drivers in time to avoid a rear-end collision. This quantity, $d_{min}$ is then calculated as follows.

$$d_{min} = d_{critical} + PosErr + SRmin_A + SRmin_B$$

This minimum distance could be made even more accurate by consideration of other parameters, such as those indicated in the table of those communicated by the beacon messages.

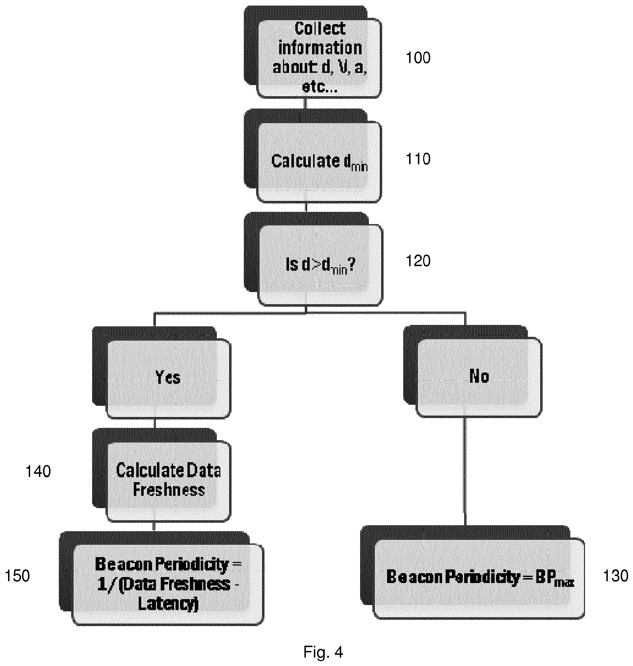

Referring next to Figure 4, depicts a flow chart of a BASE algorithm in operation, according to an embodiment. The operations will now be discussed and are performed in order to calculate the appropriate beacon periodicity. The algorithm (and indeed any method described herein) is preferably carried out at the car for which the BP calculation is being determined, but may be carried out at another car, at a road-side unit, another station in the vehicular network or a server (which may be centralised). Reference to "the car" below, indicates the car for which the BP calculation is being made. The same algorithm should be repeated for each car.

In the first step 100, the information about the car's state and the state of other cars is determined. This may be done by sensor measurement, report from other components (such as an engine computer) or by information received from beacon transmissions of other vehicles or other vehicular network stations.

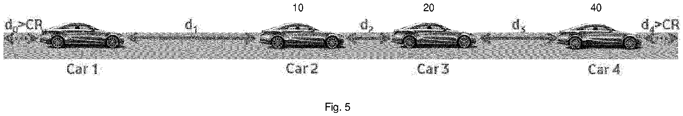

Then, in step 110, the car calculates $d_{min}$ according to the expression above. This uses the information obtained in the first step 100. A comparison between the distance between the cars, d, and $d_{min}$ is made in step 120. If d is smaller than $d_{min}$, car A 10 (with reference to Figure 1) may not be able to avoid a rear-end collision in the event of a sudden brake from car B 20. In this case, step 130 follows and, the beacon periodicity of car A 10 should be set to its maximum value. The beacon periodicity of car B 20 should also be set to its maximum value, but this will be explained below regarding a multi-car scenario, as discussed with reference to Figure 5. In this case, the crash probability is not reduced by modifying the beacon periodicity, since the maximum value has been chosen.

If the distance d between the cars is larger than $d_{min}$, step 140 follows. Here, the beacon periodicity of the two cars can be reduced (to below the maximum value), but it is highly desirable to make sure that the chosen beacon periodicity guarantees a certain distance, as given by the expression that follows.

$$d \geq TD + DecD + PosErr + SR_A + SR_B$$

Here:

$$SR_A = DF_A * V_A;$$

$$SR_B = DF_B * V_B;$$

$$DF_A = 1 / (BP_A) + Lat_A;$$

and

$$DF_B = 1 / (BP_B) + Lat_B.$$

Using these expressions, the data freshness, DF, can be determined based on the other parameters, except BP. This will assume that the data freshness for car A 10 and car B 20 are the same. Thus, in step 140, the data freshness is calculated and this will be explained below.

The total spatial resolution for car A 10 and car B 20, $SR_A + SR_B$, can be determined according to the follow expression. It should particularly be noted that PosErr is considered known and d, TD and DecD depend on known values, so they can easily be calculated. Thus, this expression provides a way to determine the total spatial resolution for any pair of vehicles.

$$SR_A + SR_B = d - (TD + DecD + PosErr)$$

As indicated above, $SR_A + SR_B$ can also be expressed as follows.

$$SR_A + SR_B = (DF_A * V_A) + (DF_B * V_B)$$

In principle $DF_A$ and $DF_B$ can be different, but they are assumed to be equal, for the sake of simplicity. If $DF_A = DF_B = DF$, the expression for the total spatial resolution can be rewritten as follows.

$$SR_A + SR_B = DF*(V_A + V_B)$$

Solving this for the data freshness then provides the following expression and the data freshness can therefore be found by substituting the value for total spatial resolution given above (based on distance and other factors) and the known values for each vehicle's velocity.

$$DF = (SR_A + SR_B)/(V_A + V_B))$$

Next in step 150, the beacon periodicity is obtained using the expression as follows, assuming the end-to-end latency is known.

$$BP = 1 / (DF - Lat)$$

Simulations have been performed to evaluate this BASE algorithm. According to these, if two cars are travelling at 100km/h (27.78 m/s) and their relative distance is equal or greater than 40 meters, the amount of generated traffic is up to 80% lower than the traffic generated by sending the beacon packets with a fixed periodicity every 100ms.

In general terms, there may be provided a method for controlling periodic transmission of beacon messages from a vehicular network station at a vehicle. The beacon messages each comprise data specific to the vehicle (for example, one or more of: position; movement; communication status). The method comprises: determining at least one parameter of the vehicle and/or at least one parameter of one other vehicle having an associated vehicular network station (preferably both); and setting an updated periodicity of the periodic transmission, BP, based on one or more of the parameters determined for the vehicle and/or the other vehicle. In particular, these parameters are used to determine a spatial resolution, based on a distance around the vehicle (preferably along the vehicle's direction of travel) in which the presence of another object may cause a hazard. This may be established by taking into account errors, tolerances and times taken to react and/or slow. Using the spatial resolution and one or more movement parameters, specifically velocity (but acceleration may additionally be used), a data freshness is identified. The data freshness indicates a time period between transmission of a first periodic communication until reception of a second periodic communication, where the time between the first and second periodic communications defines the period of the periodic transmission. The periodic communications are from a first vehicular network station to a second vehicular network station. Using the data freshness and latency information about the communications between the first and second vehicular network stations, an updated periodicity of the periodic transmission is determined.

In another sense, the updated periodicity of the periodic transmission may be determined on the basis of one or more of: a reaction distance, TD; a slowing distance, DecD, that identifies a distance determined for the vehicle to decelerate from a current velocity to a velocity of the other vehicle; a positioning error for the vehicular network station and/or the associated vehicular network station of the other vehicle, PosErr, together with a latency for communications between the vehicular network station and the associated vehicular network station of the other vehicle, Lat, whether a determined distance between the vehicle and the other vehicle, d, is less than a minimum distance, $d_{min}$, the minimum distance being determined on the basis of a predetermined maximum periodicity of the periodic transmission and increasing the periodicity of the periodic transmission, BP, in response to a reduction in a determined distance between the vehicle and the other vehicle, d (in some cases, for example up to the minimum distance and/or in some cases, the BP may stay the same for a reduced d). Preferably more than one of the additional parameters is used in combination. Most preferably, all of the parameters are used.

This algorithm allows an adaptive approach to updating the periodicity of the periodic transmission, based on parameters to provide an appropriate level of safety, according to the scenario. This can therefore reduce the usage of wireless radio resources in vehicular wireless networks that have to implement safety-related services based on periodic information exchange among cars. An advantage with respect to current approaches is that cars broadcast safety-related information at periodic instants in time that change according to the car's behaviour. For instance, if the car is static at a traffic light, the signalling will become less frequent. This allows for a more efficient use of the radio resources while still maintaining the same level of safety that would be achieved if all cars were broadcasting information with a fixed beacon periodicity. The algorithm may be implemented in a distributed way (that is, at each vehicular network station associated with or located at a vehicle) or by a centralized entity that can be used to further refine the beaconing adaptation.

A beacon controller, configured to operate in accordance with any method disclosed herein is also provided. The beacon controller may form part of a vehicular network station and such a vehicular network station is further provided. A computer program configured to perform any method disclosed herein when operated by a computer is further provided, which may be stored on a computer readable medium. The optional or preferable described herein and other implementation details are equally applicable to the method and to other aspects and may therefore equally be described as structural features of a beacon controller or software.

Optionally, the step of determining at least one parameter of the vehicle comprises determining the reaction distance, TD, based on the at least one parameter of the vehicle. For example, this may be based on: the velocity and/or acceleration of the vehicle and/or the other vehicle; and driver reaction time for the vehicle and/or the other vehicle. Typically, the positioning error for the vehicular network station and the associated vehicular network station of the other vehicle is used.

The step of determining at least one parameter of the other vehicle may comprise receiving the at least one parameter of the other vehicle from a transmission of a beacon message by the vehicular network station at the other vehicle. Thus, some or all of the data in respect of the other vehicle may be based on its vehicular network beacon transmissions.

The minimum distance may be calculated in a number of ways, based on a current velocity of the vehicle, $V_A$ and the other vehicle, $V_B$; and the latency for communications, Lat. Advantageously, the minimum distance may also be based on one or more of: the reaction distance, TD; the slowing distance, DecD; the positioning error for the vehicular network station and/or the associated vehicular network station of the other vehicle, PosErr. Preferably, more than one of these parameters are used and more preferably, all are used. The method further comprises: determining a minimum data freshness parameter, $DF_{min}$, for the vehicle and for the other vehicle, the data freshness parameter being determined based on the maximum periodicity of the periodic transmission for the respective vehicle, $BP_{max}$, and the latency for communications, Lat, in particular $1/BP_{max}$ + Lat. Then, the method further comprises: determining a minimum spatial resolution for the vehicle, $SR_{min,A}$ and/or for the other vehicle, $SR_{min,B}$ based on the minimum data freshness parameter for the respective vehicle, $DF_{min}$, and the velocity for the respective vehicle, V, in particular $DF_{min} * V$. The minimum spatial resolutions both for the vehicle and for the other vehicle are determined. Using these, the minimum distance, $d_{min}$, is based on the sum of the minimum spatial resolution for the vehicle, $SR_{min,A}$ and the minimum spatial resolution for the other vehicle, $SR_{min, B}$ and may be determined, based on (and preferably as the sum or weighted sum of): the reaction distance, TD; the slowing distance, DecD; and the positioning error for the vehicular network station and/or the associated vehicular network station of the other vehicle, PosErr.

The step of determining the updated periodicity of the periodic transmission, BP, comprises setting the updated periodicity of the periodic transmission to the maximum periodicity of the periodic transmission for the vehicle, $BP_{max}$, if the determined distance between the vehicle and the other vehicle, d, is less than the minimum distance, $d_{min}$.

Preferably, the method further comprises: determining a total spatial resolution for the vehicle and the other vehicle, $SR_A + SR_B$. This is advantageously based on one or more of (preferably some of and most preferably all of): the determined distance between the vehicle and the other vehicle, d; the reaction distance, TD; the slowing distance, DecD; and the positioning error for the vehicular network station and/or the associated vehicular network station of the other vehicle, PosErr. In particular, the total spatial resolution for the vehicle and the other vehicle may be determined by:

$$SR_A + SR_B = d - (TD + DecD + PosErr).$$

In one approach, the method may further comprise: determining a current data freshness, DF, based on the total spatial resolution, $SR_A + SR_B$; and at least one movement parameter of the vehicle and/or the other vehicle, for example the velocity of the, $V_A$; and the velocity of the other vehicle, $V_B$. In the preferred embodiment, the current data freshness is determined by:

$$DF = (SR_A + SR_B) / (V_A + V_B).$$

The step of determining the updated periodicity of the periodic transmission, BP, may then be based on the current data freshness, DF, and at least one parameter representative of the vehicular network communication between the vehicle and the other vehicle, such as the latency for communications between the vehicular network station and the associated vehicular network station of the other vehicle, Lat. This may be considered a minimum updated periodicity of the periodic transmission, $BP_{min}$. In particular, the minimum updated periodicity of the periodic transmission, $BP_{min}$, may be determined by:

$$BP_{min} = 1 / (DF - Lat).$$

When calculating the beacon periodicity, it is reasonable to add a safety margin, SM, in order to enhance the robustness of the safety mechanism. Thus, the value given for BP above may be considered a minimum value, $BP_{min}$, and the actual value used for the beacon periodicity may be determined by the following expression.

$$BP = BP_{min} + SM$$

The safety margin may be communicated by a central controller or calculated according to information stored on the vehicle. The safety margin can practically be considered dependent on: information about the driving behaviour of the car owner (such as the number of accidents, speeding or similar); weather conditions (for instance, it be set higher in case of adverse weather conditions); and a level of danger for the specific road being used (for example, accounting for the number of accidents occurred in the past, the presence of curves, or similar).

In general terms, the updated periodicity of the periodic transmission, BP, may be determined on the basis of a minimum updated periodicity of the periodic transmission, $BP_{min}$ (for example as determined above) and a safety margin, SM. In particular, the updated periodicity of the periodic transmission may be determined by:

$$BP = BP_{min} + SM.$$

Multi-car Algorithm

The BASE algorithm presented above is used to calculate the beacon periodicity of a safety application for two cars. This can be extended to consider a cluster of a generic number of cars, N. The method to calculate the beacon periodicity for the cluster can now be determined. A cluster may be defined as a group of cars within reach of each other's communication ranges. This extended version of the BASE algorithm may be termed an N-BASE Algorithm (NBA).

Referring next to Figure 5, there is shown a schematic diagram, illustrating a second scenario with four vehicles. This is used as an example for the N-BASE algorithm's application. The first car 10 (car 1) and second car 20 (car 2) are shown with the same reference numerals as for Figure 1. Also shown are a third car 30 (car 3) and a fourth car 40 (car 4). The distance between the first car 10 and second car 20 is $d_1$, the distance between the second car 20 and third car 30 is $d_2$ and the distance between the third car 30 and fourth car 40 is $d_3$. The distance between the first car 10 and the preceding object is given by $d_0$ and this is greater than a threshold, CR. Likewise, the distance between the fourth car 40 and the next object is given by $d_4$ and this is also greater than the threshold CR. This threshold may therefore define the size of the cluster.

In general, a cluster of N cars may be considered, and in the example of Figure 5, N=4. Cars have different speeds, distances between each other, accelerations, deceleration rates and a range of other parameters.

Each car calculates two beacon periodicities using the BASE algorithm. The two periodicities that a generic car (car i) of the cluster calculates are: $BP_{car\,i,1}$ that is the beacon periodicity related to the distance $d_{i-1}$ from the car

behind; and $BP_{car\,i,2}$ that is the beacon periodicity related to the distance $d_i$ from the car in the front. Each car then chooses the largest between $BP_{car\,i,1}$ and $BP_{car\,i,2}$, in order to take into account the most stringent of the two cases. This is represented by the expression that follows.

$$BP_{car\,i} = \max(BP_{car\,i,1}, BP_{car\,i,2})$$

The NBA is a distributed algorithm. This algorithm could also be implemented centrally at an infrastructure node, which has a global knowledge of the traffic pattern and can assign beacon periodicities in a more optimal way in order to reduce data traffic even more.

Generally, a further method for controlling periodic transmission of beacon messages from a vehicular network station at a vehicle may be considered. The beacon messages each comprise data specific to the vehicle, as discussed herein. The method comprises: carrying out the method described herein, wherein the other vehicle is a first other vehicle, so as to determine a first updated periodicity of the periodic transmission; and repeating the method described herein, wherein the other vehicle is a second other vehicle, different from the first other vehicle, so as to determine a second updated periodicity of the periodic transmission. Then, the method may further comprise determining an actual updated periodicity of the periodic transmission, based on the first updated periodicity of the periodic transmission and the second updated periodicity of the periodic transmission, in particular the maximum of the first updated periodicity of the periodic transmission and the second updated periodicity of the periodic transmission.

Although specific embodiments have now been described, the skilled person will understand that various modifications and variations are possible. Also, combinations of any specific features shown with reference to one embodiment or with reference to multiple embodiments are also provided, even if that combination has not been explicitly detailed herein.

In particular, it is noted that the algorithm discussed herein uses a number of assumptions, which may be varied. For instance, a constant velocity for each vehicle has been considered. This may be varied to consider non-zero acceleration cases. The skilled person will also appreciate that other errors or tolerances may be considered. Additionally or alternatively, some errors or tolerances considered herein may be omitted, for example one or more of: the thinking distance, TD; the slowing distance; the positioning error; and the latency.

## Claims

1. A method for controlling periodic transmission of beacon messages from a vehicular network station at a vehicle (10), the vehicle travelling with a velocity, $V_A$, in the same direction as and either ahead or behind one other vehicle (20) travelling with a velocity, $V_B$, the other vehicle (20) having an associated vehicular network station, wherein the beacon messages each comprise data specific to the vehicle, the method comprising:

   determining a minimum data freshness parameter, $DF_{min}$, for each of the vehicle (10) and the other vehicle (20), the data freshness parameter being determined based on the maximum periodicity of the periodic transmission for the respective vehicle, $BP_{max}$, and the latency for communications for the respective vehicle, Lat;
   determining a minimum spatial resolution for each of the vehicle (10), $SR_{min,A}$ and for the other vehicle (20), $SR_{min,B}$ based on the minimum data freshness parameter for the respective vehicle and the velocity for the respective vehicle, $V_A$, $V_B$;
   setting an updated periodicity of the periodic transmission, BP, based on whether a determined distance between the vehicle (10) and the other vehicle (20), d, is less than a minimum distance, $d_{min}$ (120), the minimum distance being determined (110) on the basis of the sum of: the minimum spatial resolution for the vehicle, $SR_{min,A}$; and the minimum spatial resolution for the other vehicle, $SR_{min,B}$; and
   wherein the BP is increased in response to a reduction in the determined distance, d, or set to the maximum periodicity of the periodic transmission for the vehicle, $BP_{max}$ (130), if the determined distance, d, is less than the minimum distance, $d_{min}$.

2. The method of claim 1, wherein the minimum distance, $d_{min}$, is further based on the sum of: the reaction distance, TD; the slowing distance, DecD; the positioning error for the vehicular network station and/or the associated vehicular network station of the other vehicle, PosErr.

3. The method of any preceding claim, further comprising:
   determining a total spatial resolution for the vehicle and the other vehicle, $SR_A + SR_B$, based on: the determined distance between the vehicle and the other vehicle, d; the reaction distance, TD; the slowing distance, DecD; and the positioning error for the vehicular network station and/or the associated vehicular network station of the other vehicle, PosErr.

4. The method of claim 3, wherein the total spatial resolution for the vehicle and the other vehicle is determined by:

$$SR_A + SR_B = d - (TD + DecD + PosErr).$$

5. The method of claim 3 or claim 4, further comprising:
determining a current data freshness, DF, (140) based on the total spatial resolution, $SR_A + SR_B$; the velocity of the vehicle, $V_A$; and the velocity of the other vehicle, $V_B$.

6. The method of claim 5, wherein the current data freshness is determined by:

$$DF = (SR_A + SR_B) / (V_A + V_B).$$

7. The method of claim 5 or claim 6, wherein the step of determining the updated periodicity of the periodic transmission, BP, is based on the current data freshness, DF, and the latency for communications between the vehicular network station and the associated vehicular network station of the other vehicle, Lat.

8. The method of claim 7, wherein a minimum updated periodicity of the periodic transmission, $BP_{min}$, is determined by:

$$BP_{min} = 1 / (DF - Lat).$$

9. The method of claim 7 or claim 8, wherein the updated periodicity of the periodic transmission, BP, is determined on the basis of a minimum updated periodicity of the periodic transmission, $BP_{min}$, and a safety margin, SM.

10. A method for controlling periodic transmission of beacon messages from a vehicular network station at a vehicle, wherein the beacon messages each comprise data specific to the vehicle, the method comprising:

carrying out the method of any preceding claim, wherein the other vehicle is a first other vehicle, so as to determine a first updated periodicity of the periodic transmission;
repeating the method of any preceding claim, wherein the other vehicle is a second other vehicle, different from the first other vehicle, so as to determine a second updated periodicity of the periodic transmission;
determining an actual updated periodicity of the periodic transmission, based on the maximum of the first updated periodicity of the periodic transmission and the second updated periodicity of the periodic transmission.

11. A beacon controller, configured to operate in accordance with any preceding claim.


**Patentansprüche**

1. Verfahren zum Steuern der periodischen Übertragung von Beaconnachrichten von einer Fahrzeugnetzwerkstation an einem Fahrzeug (10), wobei das Fahrzeug bei einer Geschwindigkeit, $V_A$, in dieselbe Richtung wie und entweder vor oder hinter einem anderen Fahrzeug (20) fährt, das bei einer Geschwindigkeit, $V_B$, fährt, wobei das andere Fahrzeug (20) eine zugeordnete Fahrzeugnetzwerkstation aufweist, wobei die Beaconnachrichten jeweils für das Fahrzeug spezifische Daten umfassen, wobei das Verfahren umfasst:

Bestimmen eines minimalen Datenaktualitätsparameters, $DF_{min}$, für jedes des Fahrzeugs (10) und des anderen Fahrzeugs (20), wobei der Datenaktualitätsparameter basierend auf der maximalen Periodizität der periodischen Übertragung für das jeweilige Fahrzeug, $BP_{max}$, und der Latenzzeit für die Kommunikation für das jeweilige Fahrzeug, Lat, bestimmt wird;
Bestimmen einer minimalen räumlichen Auflösung für jedes des Fahrzeugs (10), $SR_{min,A}$, und des anderen Fahrzeugs (20), $SR_{min,B}$, basierend auf dem minimalen Datenaktualitätsparameter für das jeweilige Fahrzeug und der Geschwindigkeit für das jeweilige Fahrzeug, $V_A$, $V_B$;
Festlegen einer aktualisierten Periodizität der periodischen Übertragung, BP, basierend darauf, ob ein bestimmter Abstand zwischen dem Fahrzeug (10) und dem anderen Fahrzeug (20), d, unter einem minimalen Abstand, $d_{min}$, (120) liegt, wobei der minimale Abstand bestimmt wird (110) auf Basis der Summe: der minimalen räumlichen Auflösung für das Fahrzeug, $SR_{min,A}$; und der minimalen räumlichen Auflösung für das andere Fahrzeug, $SR_{min,B}$; und

wobei die BP als Antwort auf eine Verringerung bei dem bestimmten Abstand, d, erhöht wird oder auf die maximale Periodizität der periodischen Übertragung für das Fahrzeug, $BP_{max}$, (130) festgelegt wird, wenn der bestimmte Abstand, d, unter dem minimalen Abstand, $d_{min}$, liegt.

**2.** Verfahren nach Anspruch 1, wobei der minimale Abstand, $d_{min}$, ferner basiert auf der Summe: des Reaktionswegs, TD; des Verlangsamungswegs, DecD; des Positionierungsfehlers für die Fahrzeugnetzwerkstation und/oder die zugeordnete Fahrzeugnetzwerkstation des anderen Fahrzeugs, PosErr.

**3.** Verfahren nach einem vorstehenden Anspruch, ferner umfassend:
Bestimmen einer räumlichen Gesamtauflösung für das Fahrzeug und das andere Fahrzeug, $SR_A + SR_B$, basierend auf: dem bestimmten Abstand zwischen dem Fahrzeug und dem anderen Fahrzeug, d; dem Reaktionsweg, TD; dem Verlangsamungsweg, DecD; und dem Positionierungsfehler für die Fahrzeugnetzwerkstation und/oder die zugeordnete Fahrzeugnetzwerkstation des anderen Fahrzeugs, PosErr.

**4.** Verfahren nach Anspruch 3, wobei die räumliche Gesamtauflösung für das Fahrzeug und das andere Fahrzeug bestimmt wird durch:

$$SR_A + SR_B = d - (TD + DecD + PosErr).$$

**5.** Verfahren nach Anspruch 3 oder Anspruch 4, ferner umfassend:
Bestimmen einer derzeitigen Datenaktualität, DF, (140) basierend auf der räumlichen Gesamtauflösung, $SR_A + SR_B$; der Geschwindigkeit des Fahrzeugs, $V_A$; und der Geschwindigkeit des anderen Fahrzeugs, $V_B$.

**6.** Verfahren nach Anspruch 5, wobei die derzeitige Datenaktualität bestimmt wird durch:

$$DF = (SR_A + SR_B) / (V_A + V_B).$$

**7.** Verfahren nach Anspruch 5 oder Anspruch 6, wobei der Schritt des Bestimmens der aktualisierten Periodizität der periodischen Übertragung, BP, auf der derzeitigen Datenaktualität, DF, und der Latenzzeit für die Kommunikation zwischen der Fahrzeugnetzwerkstation und der zugeordneten Fahrzeugnetzwerkstation des anderen Fahrzeugs, Lat, basiert.

**8.** Verfahren nach Anspruch 7, wobei eine minimale aktualisierte Periodizität der periodischen Übertragung, $BP_{min}$, bestimmt wird durch:

$$BP_{min} = 1 /(DF\text{-}Lat).$$

**9.** Verfahren nach Anspruch 7 oder Anspruch 8, wobei die aktualisierte Periodizität der periodischen Übertragung, BP, auf Basis einer minimalen aktualisierten Periodizität der periodischen Übertragung, $BP_{min}$, und eines Sicherheitsabstands, SM, bestimmt wird.

**10.** Verfahren zum Steuern der periodischen Übertragung von Beaconnachrichten von einer Fahrzeugnetzwerkstation an einem Fahrzeug, wobei die Beaconnachrichten jeweils für das Fahrzeug spezifische Daten umfassen, wobei das Verfahren umfasst:

Durchführen des Verfahrens nach einem vorstehenden Anspruch, um eine erste aktualisierte Periodizität der periodischen Übertragung zu bestimmen, wobei es sich bei dem anderen Fahrzeug um ein erstes anderes Fahrzeug handelt;
Wiederholen des Verfahrens nach einem vorstehenden Anspruch, um eine zweite aktualisierte Periodizität der periodischen Übertragung zu bestimmen, wobei es sich bei dem anderen Fahrzeug um ein zweites anderes Fahrzeug handelt, das sich von dem ersten anderen Fahrzeug unterscheidet;

Bestimmen einer tatsächlichen aktualisierten Periodizität der periodischen Übertragung basierend auf dem Höchstwert der ersten aktualisierten Periodizität der periodischen Übertragung und der zweiten aktualisierten Periodizität der periodischen Übertragung.

**11.** Beaconsteuereinheit, so konfiguriert, dass sie entsprechend einem vorstehenden Anspruch betrieben wird.

**Revendications**

**1.** Un procédé de commande d'une transmission périodique de messages de balise à partir d'une station de réseau véhiculaire au niveau d'un véhicule (10), le véhicule circulant avec une vélocité, $V_A$, dans la même direction que et soit à l'avant ou à l'arrière d'un autre véhicule (20) circulant avec une vélocité, $V_B$, l'autre véhicule (20) possédant une station de réseau véhiculaire associée, où les messages de balise contiennent chacun des données spécifiques au véhicule, le procédé comprenant :

la détermination d'un paramètre de fraîcheur de données minimale, $DF_{min}$, pour chaque véhicule parmi le véhicule (10) et l'autre véhicule (20), le paramètre de fraîcheur de données étant déterminé en fonction de la périodicité maximale de la transmission périodique pour le véhicule respectif, $BP_{max}$, et de la latence pour des communications destinées au véhicule respectif, Lat,

la détermination d'une résolution spatiale minimale pour chaque véhicule parmi le véhicule (10), $SR_{min,A}$ et l'autre véhicule (20), $SR_{min,B}$ en fonction du paramètre de fraîcheur de données minimale pour le véhicule respectif et de la vélocité pour le véhicule respectif, $V_A$, $V_B$,

le réglage d'une périodicité actualisée de la transmission périodique, BP, selon qu'une distance déterminée entre le véhicule (10) et l'autre véhicule (20), d, est inférieure à une distance minimale, $d_{min}$ (120), la distance minimale étant déterminée (110) sur la base de la somme de : la résolution spatiale minimale pour le véhicule, $SR_{min,A}$, et la résolution spatiale minimale pour l'autre véhicule, $SR_{min,B}$, et

où la BP est augmentée en réponse à une réduction de la distance déterminée, d, ou réglée sur la périodicité maximale de la transmission périodique pour le véhicule, $BP_{max}$ (130), si la distance déterminée, d, est inférieure à la distance minimale, $d_{min}$.

**2.** Le procédé selon la Revendication 1, où la distance minimale, $d_{min}$, est en outre basée sur la somme de : la distance de réaction, TD, la distance de ralentissement, DecD, l'erreur de positionnement pour la station de réseau véhiculaire et/ou la station de réseau véhiculaire associée de l'autre véhicule, PosErr.

**3.** Le procédé selon l'une quelconque des Revendications précédentes, comprenant en outre :
la détermination d'une résolution spatiale totale pour le véhicule et l'autre véhicule, $SR_A + SR_B$, en fonction de : la distance déterminée entre le véhicule et l'autre véhicule, d, la distance de réaction, TD, la distance de ralentissement, DecD, et l'erreur de positionnement pour la station de réseau véhiculaire et/ou la station de réseau véhiculaire associée de l'autre véhicule, PosErr.

**4.** Le procédé selon la Revendication 3, où la résolution spatiale totale pour le véhicule et l'autre véhicule est déterminée par :

$$SR_A + SR_B = d - (TD + DecD + PosErr).$$

**5.** Le procédé selon la Revendication 3 ou 4, comprenant en outre :
la détermination d'une fraîcheur de données, DF, actuelle (140) en fonction de la résolution spatiale totale, $SR_A + SR_B$, de la vélocité du véhicule, $V_A$, et de la vélocité de l'autre véhicule, $V_B$.

**6.** Le procédé selon la Revendication 5, où la fraîcheur de données actuelle est déterminée par :

$$DF = (SR_A + SR_B) / (V_A + V_B).$$

**7.** Le procédé selon la Revendication 5 ou 6, où l'opération de détermination de la périodicité actualisée de la transmission périodique, BP, est basée sur la fraîcheur de données, DF, actuelle et la latence pour des communications entre la station de réseau véhiculaire et la station de réseau véhiculaire associée de l'autre véhicule, Lat.

8. Le procédé selon la Revendication 7, où une périodicité actualisée minimale de la transmission périodique, $BP_{min}$, est déterminée par :

$$BP_{min} = 1 / (DF\text{-}Lat).$$

9. Le procédé selon la Revendication 7 ou 8, où la périodicité actualisée de la transmission périodique, BP, est déterminée sur la base d'une périodicité actualisée minimale de la transmission périodique, $BP_{min}$, et d'une marge de sécurité, SM.

10. Un procédé de commande d'une transmission périodique de messages de balise à partir d'une station de réseau véhiculaire au niveau d'un véhicule, où les messages de balise comprennent chacun des données spécifiques au véhicule, le procédé comprenant :

l'exécution du procédé selon l'une quelconque des Revendications précédentes, où l'autre véhicule est un premier autre véhicule, de façon à déterminer une première périodicité actualisée de la transmission périodique, la répétition du procédé selon l'une quelconque des Revendications précédentes, où l'autre véhicule est un deuxième autre véhicule, différent du premier autre véhicule, de façon à déterminer une deuxième périodicité actualisée de la transmission périodique, la détermination d'une périodicité actualisée réelle de la transmission périodique, en fonction de la périodicité maximale parmi la première périodicité actualisée de la transmission périodique et la deuxième périodicité actualisée de la transmission périodique.

11. Un dispositif de commande de balise, configuré de façon à fonctionner conformément à l'une quelconque des Revendications précédentes.

10

20

Beacons from A

Beacons from B

d

Car A

Car B

$V_A$, $a_A$, Dec_max$_A$, etc...

$V_B$, $a_B$, Dec_max$_B$, etc...

Fig. 1

1/(Beacon Periodicity)

time

**Data Freshness**

Latency

1st packet is created

2nd packet is received and all
previous data is updated

1st packet is received and all
previous data is updated

2nd packet is created

Fig. 2

Fig. 3

Collect
information
about d, V, a,
etc...
100

Calculate $d_{min}$
110

Is $d > d_{min}$ ?
120

Yes

No

140

Calculate Data
Freshness

150

Beacon Periodicity =
1 / (Data Freshness -
Latency)

Beacon Periodicity = $BP_{max}$
130

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014046575 A

- EP 2843639 A

**Non-patent literature cited in the description**

- **SEPULCRE, MIGUE et al.** Congestion and awareness control in cooperative vehicular systems. *Proceedings of the IEEE,* 2011, vol. 99 (7), 1260-1279